# EUROPEAN PATENT APPLICATION

(11) **EP 2 264 254 A1**
(43) Date of publication of application: **22.12.2010**
(21) Application number: 10163685.0
(22) Date of filing: 24.05.2010
(51) Int. Cl.: E03F 5/02, E03F 5/14, E03B 3/02

(54) **Chamber**

(30) Priority: 26.05.2009 FI 20095580
(71) Applicant: Uponor Innovation Ab, 73061 Virsbo (SE)
(72) Inventor: Juuti, Rauno, 15550 Nastola (FI); Puolimatka, Ville-Veikko, 15140 Lahti (FI)
(74) Representative: Huhtanen, Ossi Jaakko

(57) **Abstract**

The invention relates to a chamber comprising a frame (1) and at least two connections (2a, 2b) at the frame for connecting a pipe to the chamber. The connections (2a, 2b) are arranged at a distance from the bottom of the chamber so that a dirt chamber (6) is formed at the bottom of the chamber. The connections (2a, 2b) comprise an inner casing (3) directed to the inside of the frame (1) and provided with an inner connection surface (4) for connecting the pipe to the chamber. The chamber comprises an outlet connection (2a) which is arranged lower than any one of the other connections (2b).

## Description

### Background of the invention

The invention relates to a chamber comprising a frame and at least two connections at the frame for connecting a pipe to the chamber, the connections being arranged at a distance from the bottom of the chamber so that a dirt chamber is formed at the bottom of the chamber.

Rainwater chambers and inspection chambers or manholes are typically manufactured in such a manner that, at a working site, a cylindrical chamber frame is provided with an opening and a pipe is connected to the opening. The pipe is connected to the opening by gluing or welding, for example. If the chamber is manufactured in this manner, however, it requires a plurality of different working stages at the working site, and the chamber building becomes all in all very arduous and difficult. Also the formation of tight connections requires remarkable expertise.

Thus, chambers are known, where the frame has ready-fitted connections, on the outer surface of which there is a connection surface to which a collar socket is arranged, and a pipe to be connected is arranged inside the collar socket. With this kind of structure, it is very difficult to keep the connection surface intact during transport, storage and other handling of the chamber. Furthermore, connecting the pipe to the chamber thus requires the use of a collar socket. As a whole, the structure of a chamber is fairly complicated and difficult.

Publication SE 450161 discloses a chamber with connections, which comprise an outermost cylindrical casing directed outwards from the chamber frame and connected by an annular part to a cylindrical casing directed to the inside of the chamber frame, this casing for its part being connected by an annular part to a cylindrical part directed outwards from the chamber frame, etc. Consequently, the connection is provided with a plurality of connection surfaces within each other and with different diameters. However, such a solution has a very complicated structure and it is very challenging to seal the pipes to the connection. The connections are at a distance from the bottom of the chamber, and liquid accumulates in this space below the connections at the bottom of the chamber. As the liquid freezes, it causes a great load on the connection and may break the connection or create a crack at the connecting point between the connection and the wall of the chamber.

### Brief description of the invention

It is an object of the present invention to provide a new type of chamber.

The chamber of the invention is **characterized in that** the connections comprise an inner casing directed to the inside of the frame and comprising an inner connection surface for connecting the pipe to the chamber, and that the chamber comprises an outlet connection, which is arranged lower than any one of the other connections.

The idea of the invention is that the chamber frame comprises at least two connections for connecting a pipe to the chamber. The connections are arranged at a distance from the bottom of the chamber so that a dirt chamber is formed at the bottom of the chamber. A connection comprises an inner casing directed to the inside of the frame and provided with an inner connection surface for connecting the pipe to the chamber. The chamber also comprises an outlet connection which is arranged lower than any one of the other connections.

The inwards-directed inner casings of the connections form inner connection surfaces, which are protected from damage during transport and handling of the chamber. Since the outlet connection is arranged lower than any one of the other connections, the upper level of liquid that accumulates in the dirt chamber is set to a height defined by the outlet connection. Since the other connections are located higher than the outlet connection, the liquid level in the dirt chamber does not reach the other connections, and the freezing of the liquid in the dirt chamber does not cause any stress to them or the wall of the chamber. The outlet connection is always connected with a pipe, which also supports the outlet connection. Thus, although the lower edge of the outlet connection comes into contact with the liquid level, the freezing of the liquid does not essentially damage the outlet connection or the wall of the chamber in the vicinity of the outlet connection.

The idea of an embodiment is that the chamber frame comprises a plurality of grooves or other similar shape structures one upon the other, reinforcing the wall of the frame. In this case, the frame is preferably provided with a plurality of cut-off points so that the reinforcement shape below the cut-off point forms a shoulder for the cover of the chamber. The overall height of the chamber frame may then be selected at a working site by cutting the chamber frame at a desired point. Below each cut-off point there is a shoulder for the chamber cover, whereby after the height adjustment of the chamber there is provided a support in the frame structure of the chamber for the chamber cover.

### Brief description of figures

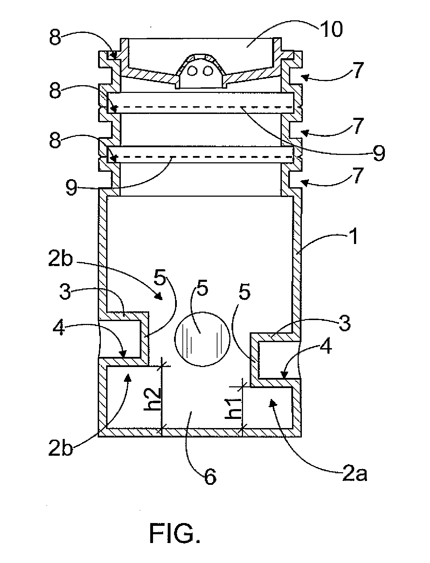

The invention will be explained in greater detail by referring to the attached figure, which schematically shows a side view of a chamber in cross section.

In the figures, some embodiments of the invention are shown simplified for the sake of clarity.

### Detailed description of the invention

The figure shows a chamber frame 1. In the embodiment of the figure, the frame 1 is mainly cylindrical. At the frame 1 of the chamber there are connections 2a, 2b for connecting a pipe to the chamber. An outlet connection is marked with 2a and inlet connections are marked with 2b. In the embodiment shown in the figure, the frame 1 is provided with one outlet connection 2a and at least two inlet connections 2b. Since the figure is a cross-sectional view, it only shows two inlet connections 2b. The connections 2a, 2b are formed as integrated parts of the frame 1. The connections 2a, 2b may be formed at the same working stage as the frame 1. Preferably the chamber 1 is manufactured by blow moulding. The chamber 1 may also be manufactured by rotational moulding, for instance. The material of the chamber 1 may be, for example, polyethylene PE, cross-linked polyethylene PEX, or polypropylene PP.

The connection 2a, 2b comprises an inner casing 3 directed to the inside of the frame 1. The inner casing 3 comprises an inner connection surface 4 for connecting a pipe to the chamber. The inner diameter of the inner connection surface 4 is formed so as to correspond to the outer diameter of the pipe to be connected thereto.

The connection 2a, 2b comprises a connection bottom 5, due to which the connection 2a, 2b is closed when it has not been taken into use. When the connection 2a, 2b is taken into use, at least the majority of the connection bottom 5 is removed. Thus, the connection 2a, 2b is provided with an opening, through which liquid is able to flow. The connection 2a, 2b may be opened by sawing or cutting with a knife, for example. The outlet connection 2a may also be made open so that it is already opened at the factory during the manufacture of the chamber, which means that the outlet connection 2a is already open before the chamber is taken into use.

The connections 2a, 2b are arranged at a distance from the bottom of the chamber so that a dirt chamber 6 is formed at the bottom of the chamber. The dirt chamber 6 is a space at the bottom of the chamber, where sand, leaves and other impurities and, naturally, for example rainwater and/or other liquids accumulate.

The distance h1 between the outlet connection 2a and the bottom of the chamber is smaller than the distance h2 between the inlet connections 2b and the bottom of the chamber. The distance h2 between the inlet connections 2b and the bottom of the chamber is so much greater than the distance h1 between the outlet connection 2a and the bottom of the chamber that the liquid level in the dirt chamber 6 is set lower than what is the distance h2 between the inlet connections 2b and the bottom of the chamber. The distance h1 between the outlet connection 2a and the bottom of the chamber may be, for instance, 10 to 50 mm smaller than the distance h2 between the inlet connections 2b and the bottom of the chamber. The difference in the distances h1 and h2 preferably equals at least the sum of the wall thickness of the outlet connection 2a and the wall thickness of the pipe connected thereto.

The upper part of the chamber frame 1 is provided with reinforcement shapes for strengthening the wall of the frame 1. In the embodiment of the figure, the reinforcement shapes are annular grooves 7 directed to the inside of the frame 1 and encircling the frame. The reinforcement shapes form a shoulder 8. Above each reinforcement shape 7 and its shoulder 8 there is provided a cut-off point 9. The cut-off point may be, for example, a small groove or protrusion or grooves or protrusions in the wall of the frame 1, or a marking line or other similar indication of a cut-off point. For adjusting the height of the chamber, its frame 1 may thus be cut off at any cut-off point 9. The shoulder 8 under the cut-off point 9 provides a support for a cover 10 of the chamber.

The chamber cover 10 may be, for example, funnel-shaped or bowl-like, such as a downpipe chamber collecting rainwater and leading it to a chamber, an embodiment of the downpipe chamber being shown in the attached figure. The cover 10 may also be a grating made of plastic or metal, such as aluminium or steel. In some embodiments the cover 10 may also be solid.

In some cases, the features disclosed in this application may be used as such, regardless of other features. On the other hand, the features disclosed in this application may, when necessary, be combined to form various combinations.

The drawings and the related description are only intended to illustrate the idea of the invention. The details of the invention may vary within the scope of the claims.

In addition to or instead of an annular groove 7, the reinforcement shape strengthening the frame may also be, for example, a rib structure or other similar shape that increases the rigidity of the frame. The connection 2 may further comprise inner connection surfaces with different diameters. In this case, different connection surfaces are preferably arranged one after another in the axial direction of the connection 2a, 2b so that the connection surface with a smaller diameter is arranged closer to the middle part of the chamber than the connection surface with a bigger diameter. Furthermore, the connection 2a, 2b may comprise an outer casing which is directed outwards from the frame 1 and where the wall of the connection 2a, 2b turns to form the inner casing 3 directed to the inside of the frame 1.

The chamber frame 1 may also be provided with two or more connections 2a, 2b on top of one another. The angle between the directions of the connections 2a, 2b, the number of connections to be arranged around the chamber and also the number of connections 2a, 2b to be arranged on top of one another may vary as desired.

Preferably the chamber is manufactured by blow moulding. As mentioned, it is also possible to employ rotational moulding. In the manufacture, one single basic mould can be used for a variety of products in such a manner that an insert is arranged at the basic mould at the bottom part of the chamber frame, for instance, if the aim is, for instance, to make the dirt chamber 6 bigger than the chamber produced by the basic mould. Furthermore, if the aim is to manufacture a drain well, for example, an insert may be added to the basic mould at the upper end of the well, which makes the well higher. In the embodiments of the figure, the bottom and top parts of the chamber are formed into one piece, but the chamber may also be provided with a separate riser pipe, which in this case is a separate part connected to the frame forming the bottom part of the chamber.

## Claims

1. A chamber comprising a frame (1) and at least two connections (2a, 2b) at the frame for connecting a pipe to the chamber, the connections (2a, 2b) being arranged at a distance from the bottom of the chamber so that a dirt chamber (6) is formed at the bottom of the chamber, **characterized in that**
the connections (2a, 2b) comprise an inner casing (3) directed to the inside of the frame (1) and provided with an inner connection surface (4) for connecting the pipe to the chamber, and that
the chamber comprises an outlet connection (2a) which is arranged lower than any one of the other connections (2b).

2. A chamber as claimed in claim 1, **characterized in that**
the distance (h2) between the inlet connections (2b) and the bottom of the chamber is greater than the sum of the distance (h1) between the outlet connection (2a) and the bottom of the chamber, the wall thickness of the outlet connection (2a) and the wall thickness of the pipe connected to the outlet connection (2a).

3. A chamber as claimed in claim 1 or 2, **characterized in that**
the distance (h2) between the inlet connections (2b) and the bottom of the chamber is 10 to 50 mm greater than the distance (h1) between the outlet connection (2a) and the bottom of the chamber.

4. A chamber as claimed in any one of the preceding claims, **characterized in that**
at the upper part of the chamber there are a plurality of reinforcement shapes on top of one another and cut-off points (9) above the reinforcement shapes, whereby the height of the chamber is adjustable by cutting it at a desired cut-off point (9).

5. A chamber as claimed in claim 4, **characterized in that** the reinforcement shape provides a support for a cover (10) of the chamber.

6. A chamber as claimed in claim 4 or 5, **characterized in that**
the reinforcement shape is an annular groove (7) directed to the inside of the frame (1) and encircling the frame (1).

7. A chamber as claimed in any one of the preceding claims, **characterized in that**
the chamber is a rainwater chamber.

8. A chamber as claimed in any one of the preceding claims, **characterized in that**
the chamber is manufactured by blow moulding.
